# EUROPÄISCHE PATENTSCHRIFT

(11) **EP 3 519 514 B1**
(45) Veröffentlichungstag und Bekanntmachung des Hinweises auf die Patenterteilung: **17.02.2021**
(21) Anmeldenummer: 17767789.5
(22) Anmeldetag: 11.09.2017
(51) Int. Cl.: C09D 133/12, B29C 67/00

(54) **HERSTELLUNG UND VERWENDUNG VON PORÖSEN PERLPOLYMERISATEN IM 3D DRUCK GEMÄSS DEM BINDER JETTING VERFAHREN**
PRODUCTION AND USE OF POROUS BEAD POLYMERS IN 3D PRINTING USING THE BINDER JETTING METHOD
PRÉPARATION ET UTILISATION DE POLYMÈRES POREUX EN PERLES DANS L'IMPRESSION 3D SELON LE PROCÉDÉ DE PROJECTION DE LIANT

(30) Priorität: 28.09.2016 EP 16190993
(43) Veröffentlichungstag der Anmeldung: 07.08.2019
(73) Patentinhaber: Evonik Röhm GmbH, 64293 Darmstadt (DE)
(72) Erfinder: WIEBER, Stephan, 76137 Karlsruhe (DE); POPPE, Dirk, 60599 Frankfurt am Main (DE); BERNHARDT, Stefan, 63075 Offenbach (DE); PRIDÖHL, Markus, 63538 Großkrotzenburg (DE); BALK, Sven, 60329 Frankfurt (DE); MEIER, Christian, 64295 Darmstadt (DE); SCHAACK, Senada, 60438 Frankfurt am Main (DE); HASSKERL, Thomas, 61476 Kronberg (DE)
(74) Vertreter: Evonik Patent Association
(86) Internationale Anmeldenummer: PCT/EP2017/072673
(87) Internationale Veröffentlichungsnummer: WO 2018/059912

(56) Entgegenhaltungen:
- DE-A1-102007 061 445
- US-A1- 2015 054 195
- US-A1- 2015 344 682

## Beschreibung

### Gebiet der Erfindung

Die vorliegende Erfindung betrifft das technische Gebiet des 3D-Drucks, insbesondere in Form des Binder Jetting Verfahrens, bei dem Partikel in einem Pulverbett mittels eines verdruckten Klebstoffs zu einem dreidimensionalen Objekt verklebt werden. Bei den Partikeln kann es sich dabei um anorganische Materialien, wie z.B. Sand oder ein Metallpulver, oder um polymere Partikel, wie zum Beispiel Polymethacrylate oder Polyamide, handeln. Polymethacrylate können dazu beispielsweise als Suspensionspolymerisate, so genannte Perlpolymerisate, vorliegen.

Die vorliegende Erfindung betrifft die Verwendung von porösen Partikeln im Binder Jetting Verfahren, insbesondere von porösen Suspensionspolymerisaten. Diese Pulver für den 3D-Druck unterscheiden sich vom Stand der Technik dadurch, dass durch die Porosität eine schnellere und bessere Aufnahme des gedruckten Bindemittels durch die Pulverpartikel erfolgt. Ein großer Vorteil dieses Vorgehens ist darüber hinaus, dass ein Produkt mit weniger Verzug gebildet wird, und dass das Endprodukt ein besseres Oberflächenbild aufweist.

### Stand der Technik

Binder Jetting ist ein additiver Produktionsprozess, der auch unter dem das Verfahren gut beschreibenden Begriff 3D-Tintenstrahl-Pulverdruck bekannt ist. Bei diesem Verfahren wird ein flüssiges Bindemittel, beispielsweise mittels eines handelsüblichen Inkjet-Druckkopfes, auf eine Pulverschicht aufgetragen und damit gezielt ein Teil dieser Pulverschicht miteinander verbunden. Durch das im Wechsel mit diesem Auftragen erfolgende Aufbringen neuer Pulverschichten wird letztendlich ein dreidimensionales Produkt geformt. Beim Binder Jetting können verschiedene Materialien als Bindemittel und als Pulvermaterial eingesetzt werden. Als Pulvermaterialien sind beispielsweise Polymerpartikel, Sand, Keramikpartikel oder Metallpulver mit einem jeweiligen Durchmesser zwischen 10 und wenigen 100 µm geeignet. Bei der Verwendung von Sand entfällt zumeist eine Nachbearbeitung des fertigen Gegenstandes. Bei anderen Materialien, wie zum Beispiel den Polymerpulvern wie u.a. PMMA, kann ein nachträgliches Härten, Sintern und/oder Infiltrieren des Gegenstandes nötig sein. Eine solche nachträgliche Bearbeitung ist jedoch eigentlich unerwünscht, da sie zeit- bzw. kostenaufwendig ist und aufgrund eines oft auftretenden Schrumpfes zu einer negativen Beeinflussung der Dimensionsstabilität führen kann.

Das Aufbringen des Bindemittels erfolgt in der Regel analog dem herkömmlichen zweidimensionalen Papierdruck. Beispiele für Bindemittelsysteme sind flüssige vinylische Monomere, die mittels in dem Pulvermaterial enthaltenen Peroxiden ausgehärtet werden. Alternativ oder zusätzlich enthält das Pulvermaterial einen die Aushärtung beschleunigenden bzw. erst bei der Umgebungstemperatur ermöglichenden Katalysator. Als Beispiel für einen solchen Katalysator für Acrylatharze bzw. -monomere mit Peroxiden als Initiator stellen Amine, insbesondere sekundäre Amine dar.

Gegenüber anderen 3D-Druckverfahren wie FDM, SLS oder Stereolithographie, die sämtlich auf einem Aufschmelzen oder Verschweißen des, das Produkt bildenden, Materials basieren, hat das Binder Jetting große Vorteile. So ist dieses Verfahren von allen bekannten Verfahren am besten geeignet, farbige Objekte ohne nachträgliche Farbgebung direkt zu realisieren. Auch ist insbesondere dieses Verfahren dazu geeignet, besonders große Gegenstände herzustellen. So sind Produkte bis hin zu einer Zimmergröße beschrieben. Weiterhin sind auch andere Verfahren sehr zeitintensiv. Abgesehen von der eventuell nötigen Nachbearbeitung kann das Binder Jetting im Vergleich zu den anderen Verfahren sogar als besonders zeiteffizient betrachtet werden. Darüber hinaus hat das Binder Jetting den großen Vorteil gegenüber anderen Verfahren, dass es ohne Hitzezufuhr erfolgt. Bei Verfahren, die mittels Aufschmelzen oder Verschweißen erfolgen, entstehen im Produkt durch diesen ungleichmäßigen Wärmeeintrag Spannungen, die zumeist in Folgeschritten wie einer thermischen Nachbehandlung, die weiteren Zeit- und Kostenaufwand bedeuten, wieder aufgelöst werden müssen.

Nachteilig am Binder Jetting ist die verfahrensbedingte Porosität des Produktes. So ergibt sich beispielsweise bei einer Messung der Zugfestigkeit nur ein Wert von ca. 5% gegenüber einem spritzgegossenen Formteil aus einem vergleichbaren Material. Aufgrund dieses Nachteils wird das Binder Jetting bis dato überwiegend zur Herstellung von Dekorstücken oder zur Abformung von Sandformen eingesetzt. Die Porosität ergibt sich vor allem aus der Tatsache, dass bei bekannten Druckverfahren nur ein Teil der Hohlräume zwischen den Partikeln mit dem Bindemittel aufgefüllt werden. Dies ergibt sich zwangsläufig aus der geringen Viskosität des aufgedruckten, flüssigen Bindemittels. Sollte mehr aufgetragen werden, so verläuft dies direkt vor und auch während des beginnenden Aushärtens in Nachbarpartikel bzw. Hohlräume zwischen den Partikeln (so genannte Zwickel). Dies wiederum führt zu einem ungenauen, unsauberen Druckbild, bzw. zu einer geringen Oberflächengenauigkeit am fertigen Gegenstand.

Bisher werden Kunststoffteile, die nach dem Binder Jetting Verfahren hergestellt wurden, vor allem zum Abformen von Sandformen eingesetzt. Durch eine Verbesserung der mechanischen Eigenschaften der Verfahrensprodukte könnte die Stabilität der Formkörper so weit erhöht werden, dass sie als Funktionsteile Verwendung finden könnten.

Beim Binder Jetting bewegt sich ein Tintenstrahldruckkopf selektiv über ein Pulverbett und druckt das flüssige Bindermaterial genau an den Stellen, die verfestigt werden sollen. Ein Beispiel für die Verfestigung ist die Reaktion zwischen flüssigen vinylischen Monomeren in der Tinte und Peroxiden, die im Pulver enthalten sind. Die Reaktion wird durch einen Katalysator z. B. auf der Basis eines Amins so stark beschleunigt, dass sie bei Raumtemperatur stattfindet. Der Prozess wird Lage für Lage wiederholt bis das Formteil fertig ist. Nach dem Beenden des Druckprozesses lässt sich das Formteil aus dem Pulverbett entnehmen und ggf. einer Nachbehandlung zuführen.

Bisher kommen Polymerpulver auf Basis von Suspensionspolymerisaten zum Einsatz. Die Größe der Polymerpartikel liegt im Allgemeinen zwischen einigen zehn und einigen Hundert Mikrometern. Diese Partikel zeichnen sich durch gute Rieselfähigkeit aus, sie kleben nicht zusammen und lassen sich gut als Pulverbett auftragen. Setzt man Polymerpartikel ein, die einen Gehalt von Peroxiden aufweisen, so lässt sich leicht eine Reaktion mit dem (Meth)acrylathaltigen Binder durchführen.

J. Presser beschreibt in seiner Dissertation "Neue Komponenten für das generative Fertigungsverfahren des 3D-Drucks" (TU Darmstadt, 2012) die Verwendung von gefällten Emulsionspolymerisaten als Pulver für das Binder-Jetting-Verfahren. Diese Emulsionpolymerisate füllen dazu teilweise die Zwischenräume zwischen den eigentlichen Partikeln und führen damit zu einer Reduktion der Porosität. Die Aufarbeitung über Koagulation, Trocknung und Siebung führt aber zu nicht runden Sekundärpartikeln unregelmäßiger Größenverteilung. Weiterhin hat sich gezeigt, dass die so eingesetzten Emulsionspolymerisate die Schüttdichte kaum erhöhen und in Bezug auf die Stabilität des gedruckten Objekts keinen nennenswerten Einfluss haben.

### Aufgabe

Die der vorliegenden Erfindung zugrunde liegende Aufgabe war es, das Binder Jetting Verfahren dadurch zu beschleunigen, dass ein schnelleres Anhaften der Partikel untereinander im Pulverbett erfolgt und gleichzeitig, dass das Endprodukt des Druckvorgangs eine bessere Oberflächenqualität aufweist, ohne dass eine zeitaufwendige Nachbearbeitung des Produktes erfolgen muss.

Weiterhin war es Aufgabe, die mechanische Stabilität von Produkten eines Binder Jetting Verfahrens, insbesondere solche auf Basis eines Polymerpulvers, insbesondere eines PMMA-Pulvers, derart zu verbessern, dass diese als Funktionsteile eingesetzt werden können.

Insbesondere war es Aufgabe in diesem Zusammenhang, Formteile zu realisieren, die zumindest eine Zugfestigkeit von 25 MPa aufweisen. "Analog" bedeutet in diesem Fall beispielsweise, dass ein spritzgegossener PMMA-Formkörper mit einem Binder Jetting-Produkt auf Basis eines PMMA-Pulvers verglichen wird.

Weitere nicht explizit genannte Aufgaben können sich aus der Beschreibung, den Beispielen oder den Ansprüchen der vorliegenden Anmeldung, bzw. aus dem Gesamtzusammenhang derselben ergeben.

### Lösung

Überraschend wurden diese Aufgaben mittels eines neuartigen Verfahrens zur Herstellung von dreidimensionalen Objekten aus einem Pulverbett mittels einem Binder Jetting Verfahren gelöst. In diesem Verfahren wird durch mehrfaches Wiederholen der Verfahrensschritte a) selektives Auftragen eines Bindemittels auf die Oberfläche eines Pulverbetts und anschließenden oder gleichzeitigen Aushärten dieses Bindemittels im Pulverbett und b) Aufbringen einer neuen Pulverschicht auf der Oberfläche des Pulverbetts das dreidimensionale Objekt gebildet. Erfindungsgemäß weist das Pulverbett dabei mindestens eine Art poröser Polymerpartikel auf, wobei diese porösen Partikel einen mittleren Durchmesser zwischen 10 und 500 µm und eine Porosität zwischen 5 und 20 Vol% Poren aufweisen.

Die porösen Polymerpartikel werden erfindungsgemäß beim Binder Jetting Verfahren als Pulvermaterial im Pulverbett eingesetzt. Beim Bedrucken mit einem Binder, namentlich einer Flüssigkeit, z.B. Lösemittel und/oder reaktives Bindemittel z.B. eine Monomermischung, die ggf. noch weitere Komponenten enthalten kann, steht eine größere Oberfläche für die Anbindung zur Verfügung. Dadurch können die mechanischen Eigenschaften verbessert werden. Falls das Bindersystem ein reaktives Bindemittel darstellt, kann dadurch ein interpenetrierendes Netzwerk entstehen.

Ein interessanter, wie auch sehr überraschender Effekt der vorliegenden Erfindung ist, dass man trotz der Verwendung poröser Partikel gleichzeitig den Vorteil im gedruckten Endprodukt erhält, dass in diesem eine geringere Porosität und damit eine höhere mechanische Stabilität erlangt wird. Dies erklärt sich überraschend durch eine bessere Aufnahme des Binders durch die porösen Partikel, und damit eine bessere Anhaftung zwischen den Partikeln. Somit kann mehr Bindemittel im eigentlichen Druckverfahren eingesetzt werden, ohne die Formtreue zu verlieren. Damit werden durch die schnellere Aufnahme und die größere Menge Binder überraschend auch die Zwickel zwischen den Partikeln besser gefüllt und somit ergibt sich gegenüber dem Inkjet-3D-Druck des Standes der Technik eine insgesamt sogar geringere Porosität.

Überraschend wurden durch Anwendung des erfindungsgemäßen Verfahrens Produkte erzielt, die eine Zugfestigkeit von 25 MPa (nach DIN ISO 527-1) oder darüber aufweisen. Genauso überraschend konnten Druckergebnisse hergestellt werden, die ca. 50% des Zug-E-Moduls eines analogen spritzgegossenen Teils oder sogar leicht darüber aufweisen. Dies ist gegenüber dem Stand der Technik in dieser Drucktechnik eine deutliche Weiterentwicklung, die in dieser Deutlichkeit nicht zu erwarten gewesen wäre. Die Messungen erfolgten an Standartteststücken für Zug-Dehnungs-Versuche, die mittels eines erfindungsgemäßen Verfahrens ausgedruckt wurden.

Bevorzugt handelt es sich bei dem porösen Partikel um einen Polymerpartikel, enthaltend einen zur Aushärtung des Bindemittels geeigneten Initiator oder einen die Aushärtung beschleunigenden Katalysator oder Beschleuniger. Bei den genannten Initiatoren kann es sich beispielsweise um dem Fachmann allgemein bekannte Peroxide oder Azoinitiatoren handeln. Bei den Beschleunigern handelt es sich beispielsweise um Verbindungen, die in Kombination mit einem Initiator, welcher wiederum für sich alleine eine relativ hohe Zerfallstemperatur aufweist, die Zerfallstemperatur dieses Initiators absenkt. Dies ermöglicht, dass schon bei der Umgebungstemperatur im Drucker oder bei einem Temperschritt bis 50 °C die Härtung gestartet wird. Im Falle eines hochzerfallenden Initiators wären dafür zum Beispiel sekundäre oder tertiäre, zumeist aromatische Amine geeignet. Genannte Katalysatoren können eine entsprechende oder ähnliche, aktivierende Wirkung haben. Die genaue Zusammensetzung des Initiatorsystems ist im Allgemeinen für den Fachmann jedoch einfach zu wählen.

Ganz besonders bevorzugt handelt es sich bei dem Polymerpartikel um ein PMMA-Suspensionspolymerisat mit einem mittleren Durchmesser zwischen 25 und 150 µm, bevorzugt zwischen 30 und 110 µm, und besonders bevorzugt zwischen 35 und 100 µm. Besonders bevorzugt handelt es sich bei den Suspensionspolymerisaten um PMMA oder MMA-Copolymerisate. Dazu können die Comonomere beispielsweise aus der Gruppe der Acrylate, Methacrylate und Styrol gewählt werden.

Vorteil eines porösen Pulverbettmaterials gegenüber anderen Lösungen, wie beispielsweise einer aggregierten Ansammlung von kleinen Partikeln im Pulverbett, ist die weiterhin bestehende Stabilität der porösen Partikel als Pulver mit gleichzeitigem Vorteil der hohen Tintenaufnahme und damit am Schluss den Erhalt eines kompakten Bauteils mit verbesserter Mechanik.

Geeignete Monomere für ein solches Suspensionspolymerisat können beispielsweise sowohl monofunktionelle (Meth)acrylate, als auch bifunktionelle bzw. multifunktionelle (Meth)acrylate sein. Dabei kann das bifunktionelle bzw. multifunktionelle (Meth)acrylat gleiche oder unterschiedliche funktionelle Gruppen enthalten. Vernetzer sind darüber hinaus bevorzugt einzusetzen, da diese das poröse Pulver zusätzlich stabilisieren. Andere geeignete Monomere können z.B. Aryldiene, wie z.B. Divinylbenzol, Alkyldiene, wie z.B. Octadien oder Alkyl-Aryldiene sein.

Die porösen Partikel zur Verwendung im Pulverbett können über verschiedene Varianten hergestellt werden. Bei diesen Varianten handelt es sich beispielsweise um die Einbringung von mindestens einem Treibmittel, mindestens einem Porenbildner und/oder mindestens einem Emulsionspolymer in einem oder mehreren Monomeren der Monomermischung zur Herstellung der Partikel.
Dabei ist bevorzugt mindestens ein vernetzendes Monomer enthalten, welches zusammen mit mindestens einem Polymerisationsinitiator und ggf. weiteren üblichen Additiven versetzt und in einer wässrigen Phase dispergiert und polymerisiert. Dabei wird die Porenstruktur während der Polymerisation bzw. durch mind. einen nachgelagerten Schritt erzeugt wird.

Der nachgelagerte Schritt kann das Lösen/waschen, das Herauslösen oder die Zersetzung des Porenbildners, Treibmittels oder Emulsionspolymers umfassen.
In einer ersten bevorzugten Ausführungsform der vorliegenden Erfindung werden die porösen Partikel mittels einer Suspensionspolymerisation hergestellt, in der die Monomermischung ein Treibmittel enthält. Bei dem Treibmittel kann es sich dabei beispielsweise um ein Alkan, ein Cycloalkan, einen Alkohol, ein Aldehyd, ein Keton oder um eine andere organische Substanz handeln. Bevorzugt weist das Treibmittel unter Normalbedingungen eine Siedetemperatur zwischen 30 und 80 °C auf.

Bei dem Alkan als Treibmittel kann es sich insbesondere um ein aliphatisches oder cyclisches Alkan handeln. In einer besonderen Variante der vorliegenden Erfindung handelt es sich bei dem Porenbildner um ein Porogen, wie zum Beispiel Cyclohexanol oder Cyclohexan, welches zur Porenbildung auch rausgewaschen werden kann.

Alternativ zur Verwendung von Treibmitteln mit eher niedriger Siedetemperatur können auch Verbindungen als eine zweite Art von Treibmittel eingesetzt werden, die sich bei einer Temperatur oberhalb von 80 °C zersetzen und dabei volatile Bestandteile freisetzen. Naturgemäß wird die Suspensionspolymerisation in einer solchen Variante bei einer Temperatur unterhalb dieser Zersetzungstemperatur durchgeführt. Besonders geeignete Beispiele für diese sich zersetzenden Verbindungen sind iso- oder tert-Butyl(meth)acrylat, welches mit der Monomermischung in der Suspensionspolymerisation copolymerisiert werden.

Unabhängig von der Art des Treibmittels hat es sich als zusätzlich vorteilhaft erwiesen, wenn die Monomermischung zusätzlich ein Nukleierungsmittel, wie beispielsweise sehr kleine anorganische Partikel, enthält.

Die zweite Variante zur Herstellung der porösen Partikel ist dadurch gekennzeichnet, dass diese mittels Suspensionspolymerisation hergestellt werden, wobei die Monomermischung nicht vernetzte Emulsionspolymerisate mit einem Durchmesser zwischen 10 und 200 nm, bevorzugt zwischen 20 und 100 nm enthält, und dass die Monomermischung bevorzugt mindestens einen Vernetzer enthält.
In diesem Verfahren kann das Emulsionspolymerisat dann nach der Isolierung der Partikel mittels einem organischen Lösungsmittel aus dem Polymerpartikel unter Porenbildung herausgelöst werden. Besonders bevorzugt handelt es sich bei dem Emulsionspolymerisat um ein solches, welches eine Glasübergangstemperatur, gemessen mittels DSC, zwischen 30 und 70 °C aufweist.

Eine dritte Variante ist schließlich dadurch gekennzeichnet, dass die porösen Partikel mittels Suspensionspolymerisation hergestellt werden, wobei die Monomermischung Wachspartikel mit einem Durchmesser zwischen 10 und 100 nm enthält, und dass die Monomermischung mindestens einen Vernetzer enthält.

Unabhängig von der Variante, sollte die Monomermischung Vernetzer enthalten, so enthält diese bevorzugt zwischen 0,1 und 10 Gew%, besonders bevorzugt zwischen 1 und 5 Gew% Vernetzer. Besonders bevorzugte Vernetzer sind di- oder tri-(Meth)acrylate oder Allyl(meth)acrylat.

Angegebene Glasübergangstemperaturen werden erfindungsgemäß - wenn nicht anders ausgeführt - mittels DSC (Differential Scanning Calometry) gemessen. Der Fachmann weiß dazu, dass die DSC nur ausreichend aussagekräftig ist, wenn nach einem ersten Aufheizzyklus bis zu einer Temperatur, die minimal 25 °C oberhalb der höchsten Glasübergangs- bzw. Schmelztemperatur, dabei jedoch mindestens 20 °C unterhalb der tiefsten Zersetzungstemperatur eines Materials liegt, die Materialprobe für mindestens 2 min bei dieser Temperatur gehalten wird. Danach wird wieder auf eine Temperatur, die mindestens 20 °C unterhalb der tiefsten zu bestimmenden Glasübergangs- oder Schmelztemperatur liegt, abgekühlt, wobei die Abkühlrate maximal 20 °C / min, bevorzugt maximal 10 °C / min betragen sollte. Nach einer weiteren Wartezeit von wenigen Minuten erfolgt dann die eigentliche Messung, bei der mit einer Aufheizrate von in der Regel 10 °C / min oder weniger die Probe bis mindestens 20 °C über die höchste Schmelz- oder Glasübergangstemperatur erhitzt wird. Die jeweiligen höchsten und tiefsten Grenztemperaturen können in einfachen Vormessungen mit einer getrennten Probe grob vorbestimmt werden.

Die Partikelgrößen wurden gemäß DIN ISO 13321:2004-10, basierend auf der wortgleich übernommenen internationalen Norm ISO 13321:1996 mittels einem N5 Submicron Particle Size Analyzer der Firma Beckman Coulter, Inc. gemessen.

Die Porösität in Form des Volumenanteils der Poren kann mittels diverser Methoden bestimmt werden. Erfindungsgemäß hat sich die Quecksilberporosimetrie, Beispielsweise mit einem der Quecksilberporosimeter Pascal 140, 240 oder 440 der Firma POROTEC erwiesen. Angegeben wird dabei das relative Volumen der Poren in Vol%.

Eine interessante, bevorzugte Ausführungsform ist eine Kombination aus mindestens zwei verschiedenen Suspensionspolymeren, wobei das eine Suspensionspolymerisat, die porösen Partikel darstellt. Eine weitere bevorzugte Ausführungsform ist die Kombination mit einem Suspensionspolymerisat, das von seiner Partikelgröße die Zwickel des porösen Gerüstpolymersystems der ersten Partikel auffüllt. Dieses Polymer in den Zwickeln ist ganz besonders bevorzugt löslich durch das Bindersystem. Weiche Polymere mit niedriger Glastemperatur lösen sich dabei schneller an als harte Polymere mit höherer Glastemperatur. Die Löslichkeit hängt auch von den Eigenschaften des Binders ab. Gute Lösemittel in diesem Sinne zeichnen sich durch niedrige Viskosität und ähnliche Polarität wie das zu lösende Harz aus.

### Detaillierte Beschreibung des Verfahrens und der Komponenten

Die im Weiteren aufgeführten Detailbetrachtungen dienen dazu eine bevorzugte Ausführungsform bzgl. deren Ausführbarkeit bei der Herstellung poröser Partikel zu verdeutlichen. Diese Betrachtungen sind jedoch nicht dazu aufgeführt, die vorliegende Erfindung in irgendeiner Form einzuschränken:
Für die Suspensionspolymerisation enthält die wässrige Phase in der Regel VE-Wasser, Dispergierhilfsmittel und gegebenenfalls weitere oberflächenaktive Stoffe, sowie Prozesshilfsmittel. Unter Rühren und je nach angestrebter Teilchengröße mehr oder weniger intensiver Scherung werden dann in diese wässrige Phase die Tropfen der Monomermischung zu feinen Tröpfchen dispergiert und durch einen externen Einfluss wie zum Beispiel Temperaturerhöhung zur Polymerisation der Monomerphase gebracht. Partikelgröße und -größenverteilung der Suspensionspolymerisate liegen bei einem solchen Vorgehen in der bekannten Größenordnung wie am Markt bestehende Systeme.

Insgesamt ist die Herstellung von porösen Suspensionspolymerisaten dem Fachmann bekannt, wenn auch nicht für den Bereich des 3D-Drucks oder Rapid Prototypings. Weitere, mehr detaillierte Herstellvorschriften findet der Fachmann beispielsweise in
F. Svec, J. M. J. Frechet, Science 273, 5272 (1996) 205-211, C. G. Gomez, C.I. Alvarez, M.C. Strumia, B.L. Rivas, P. Reyes, Journal of Applied Polymer Science 79, 5 (2001) 920-927,
D. Horäk, F. Ledicky, V. Rehäk, F. Svec, Journal of Applied Polymer Science 49, 11 (1993) 2041-2050,
O. Okay, Ç. Gürün, Journal of Applied Polymer Science 46, 3 (1992) 401-410,
S. Dubinsky, A. Petukhova, I. Gourevich, E. Kumacheva, Chemical Communications 46, 15 (2010) 2578-2580 oder in
S. Dubinsky, J. I. Park, I. Gourevich, C. Chan, M. Deetz, E. Kumacheva, Macromolecules 42, 6 (2009) 1990-1994.

### Beispielhaftes Vorgehen:

### Die wässrige Phase

Die wässrige Phase besteht aus VE-Wasser (vollentsalztes Wasser), darin gelösten und/oder dispergierten Dispergierhilfsmitteln, Prozesshilfsmitteln, ggf. Stellmitteln, ggf. noch weiteren oberflächenaktiven Stoffen und Additiven.

### Die Dispergierhilfsmittel

Als Dispergierhilfsmittel können anorganische oder organische Dispergierhilfsmittel eingesetzt werden. Die Gruppe der anorganischen Dispergierhilfsmittel umfasst frisch gefällte und redispergierte anorganische Partikel ggf. in Kombination mit weiteren oberflächenaktiven Stoffen. Es können auch kommerzielle stabile anorganische Partikeldispersionen zum Einsatz kommen. Beispiele für geeignete anorganische Dispergatoren sind Calciumphosphat, Apatit, Aluminiumhydroxyd und andere bekannte Substanzen.
Beispiele für weitere oberflächenaktive Stoffe sind Tenside, Emulgatoren, Netzmittel, Entschäumer und andere.

Die Gruppe der organischen Dispergatoren umfasst Polymere und Oligomere mit polaren Gruppen ggf. mit weiteren Additiven wie z.B. Dispergierhilfs- und Stellmitteln, Salzen und anderen. Beispiele für organische Dispergatoren sind Poly(meth)acrylsäure, Copolymere von (Meth)acrylaten und (Meth)acrylsäure, Polyvinylpyrrolidon, Polyvinylalkohol u.a.
Polyvinylalkohole können mit unterschiedlichem Molekulargewicht und Hydrolysegrad zur Steuerung der Teilchengröße und der Polymereigenschaften zum Einsatz kommen. Beispiele für geeignete teilhydrolysierte Polyvinylalkohole sind Mowiol 40-88 und Mowiol 4-88. Sie werden in Mengen zwischen 0,1 und 1 %, bevorzugt 0,1 und 0,5 % bezogen auf die wässrige Phase eingesetzt. Beispiele für Copolymere von (Meth)acrylaten und (Meth)acrylsäure sind Ammonium- und Natriumsalze der Copolymeren von MMA und Methacrylsäure. Sie werden in Mengen zwischen 0,1 und 2 %, bevorzugt 0,5 und 1 % bezogen auf die wässrige Phase eingesetzt.

Beispiele für weitere oberflächenaktive Stoffe sind Entschäumer. Als Entschäumer eignen sich natürliche und synthetische Fettöle, Mineralöle, Silikone, modifizierte Silikone und Gemische spezieller Fettsäurepartialester. Sie werden in Mengen von 0,01 bis 0,2%, bevorzugt 0,01 bis 0,05 % eingesetzt. Entschäumer verhindern die Bildung von off spec Ware in der Schaumkrone des Kessels, reduzieren Anhaftungen und verbessern die Ausbeute.

Beispiele für weitere Hilfsmittel sind pyrogene Oxide von Silizium oder Aluminium. Ein bevorzugtes Beispiel für Hilfsmittel ist pyrogenes Silziumdioxid mit einer hohen Oberfläche zwischen 50 und 200 m²/g. Hilfsmittel werden in Mengen zwischen 0 und 1 %, bevorzugt 0,05 und 0,25 % eingesetzt. Hilfsmittel wie pyrogene Oxide wirken sich günstig auf die Herstellung, Aufarbeitung und auf die Pulvereigenschaften aus. Durch Zusatz einer pyrogenen Kieselsäure verbessern sich z.B. Stabilität der Suspension, Anhaftungen am Reaktor und Rieselvermögen der Suspensionsperlen.

Beispiele für Salze sind Natriumsulfat und Magnesiumsulfat, die sich positiv auf die Krustenbildung am Reaktorrand auswirken. Sie werden in Mengen von 0,05 bis 0,5 %, bevorzugt 0,1 bis 0,3 % eingesetzt.

### Die organische Phase

Die organische Phase enthält Monomere, Polymere, Radikalinitiatoren, Vernetzer, ggf. weitere Komponenten.

### Porenbildner: Alkohole, Öle, Alkane

Treibmittel: Stoffe, die bei Zersetzung Gase wie CO₂ oder N₂ abgeben, z.B. Azo-Verbindungen, Carbonsäuren, Ester oder andere Beispiele, wie sie bereits weiter oben ausgeführt wurden.

Emulsionspolymere, beispielsweise auf (Meth)acrylat-Basis, die unvernetzt sind und leicht löslich sind.

### Reaktoren

Als Reaktoren können batchweise oder kontinuierlich betriebene Reaktoren zum Einsatz kommen. Die Gruppe der batchweise betriebenen Reaktoren umfasst Stahlreaktoren, Emaillereaktoren und Glasreaktoren. In einer besonderen Ausführungsform können die Reaktoren auch als Rührkesselkaskade geschaltet werden.

## Patentansprüche

1. Verfahren zur Herstellung von dreidimensionalen Objekten aus einem Pulverbett mittels einem Binder Jetting Verfahren durch mehrfaches Wiederholen der Verfahrensschritte a) selektives Auftragen eines Bindemittels und anschließenden oder gleichzeitigen Aushärten dieses Bindemittels im Pulverbett und b) Aufbringen einer neuen Pulverschicht auf der Oberfläche, wobei das Pulverbett mindestens eine Art poröser Polymerpartikel aufweist, **dadurch gekennzeichnet, dass** diese porösen Partikel einen mittleren Durchmesser zwischen 10 und 500 µm und dass diese porösen Partikel zwischen 5 und 20 Vol% Poren, bestimmt wie in der Beschreibung angegeben, aufweisen.

2. Verfahren gemäß Anspruch 1, **dadurch gekennzeichnet, dass** es sich bei dem porösen Partikel um einen Polymerpartikel, enthaltend einen zur Aushärtung des Bindemittels geeigneten Initiator oder einen die Aushärtung beschleunigenden Katalysator oder Beschleuniger, handelt.

3. Verfahren gemäß Anspruch 1 oder 2, **dadurch gekennzeichnet, dass** es sich bei dem Polymerpartikel um ein PMMA-Suspensionpolymerisat oder MMA-Copolymerisat mit einem mittleren Durchmesser zwischen 30 und 110 µm handelt.

4. Verfahren gemäß mindestens einem der Ansprüche 1 bis 3, **dadurch gekennzeichnet, dass** die porösen Partikel mittels Suspensionspolymerisation hergestellt werden, wobei die Monomermischung ein Treibmittel enthält.

5. Verfahren gemäß Anspruch 4, **dadurch gekennzeichnet, dass** es sich bei dem Treibmittel um ein Alkan, ein Cycloalkan, einen Alkohol, ein Aldehyd, ein Keton oder eine andere organische Substanz handelt, und dass das Treibmittel unter Normalbedingungen eine Siedetemperatur zwischen 30 und 80 °C aufweist.

6. Verfahren gemäß Anspruch 4, **dadurch gekennzeichnet, dass** es sich bei dem Treibmittel um eine Verbindung handelt, die sich bei einer Temperatur oberhalb von 80 °C zersetzt und dabei volatile Bestandteile freisetzt, und dass die Suspensionspolymerisation bei einer Temperatur unterhalb dieser Zersetzungstemperatur durchgeführt wird.

7. Verfahren gemäß Anspruch 6, **dadurch gekennzeichnet, dass** es sich bei der zersetzenden Verbindung um iso- oder tert-Butyl(meth)acrylat handelt, welches mit der Monomermischung copolymerisiert wird.

8. Verfahren gemäß mindestens einem der Ansprüche 4 bis 7, **dadurch gekennzeichnet, dass** die Monomermischung zusätzlich ein Nukleierungsmittel enthält.

9. Verfahren gemäß mindestens einem der Ansprüche 1 bis 3, **dadurch gekennzeichnet, dass** die porösen Partikel mittels Suspensionspolymerisation hergestellt werden, wobei die Monomermischung nicht vernetzte Emulsionspolymerisate mit einem Durchmesser zwischen 10 und 200 nm enthält, und dass die Monomermischung mindestens einen Vernetzer enthält.

10. Verfahren gemäß Anspruch 9, **dadurch gekennzeichnet, dass** das Emulsionspolymerisat nach der Isolierung der Partikel mittels einem organischen Lösungsmittel aus dem Polymerpartikel unter Porenbildung herausgelöst wird.

11. Verfahren gemäß Anspruch 10, **dadurch gekennzeichnet, dass** das Emulsionspolymerisat eine Glasübergangstemperatur, gemessen mittels DSC, zwischen 30 und 70 °C aufweist.

12. Verfahren gemäß mindestens einem der Ansprüche 1 bis 3, **dadurch gekennzeichnet, dass** die porösen Partikel mittels Suspensionspolymerisation hergestellt werden, wobei die Monomermischung Wachspartikel mit einem Durchmesser zwischen 10 und 100 nm enthält, und dass die Monomermischung mindestens einen Vernetzer enthält.

13. Verfahren gemäß mindestens einem der Ansprüche 1 bis 12, **dadurch gekennzeichnet, dass** als Porenbildner ein aliphatisches oder cyclisches Alkan eingesetzt wird, und dass dieses zur Porenbildung aus dem Partikel rausgewaschen wird.

14. Verfahren gemäß Anspruch 13, **dadurch gekennzeichnet, dass** es sich bei dem Porenbildner um Cyclohexanol oder Cyclohexan handelt.

15. Verfahren gemäß mindestens einem der Ansprüche 1 bis 14, **dadurch gekennzeichnet, dass** es sich bei dem Pulverbett um eine Kombination aus mindestens zwei verschiedenen Suspensionspolymeren, wobei das erste Suspensionspolymerisat die porösen Partikel darstellt, und wobei das zweite Suspensionspolymerisat in den Zwickeln zwischen dem ersten Suspensionspolymerisat vorliegt und eine niedrigere Glasübergangstemperatur als das erste Suspensionspolymerisat aufweist, handelt.

## Claims

1. Process for producing three-dimensional objects from a powder bed by means of a binder jetting process by multiple repetition of the process steps a) selective application of a binder and subsequent or simultaneous hardening of this binder in the powder bed and b) application of a new powder layer on the surface, wherein the powder bed comprises at least one type of porous polymer particles, **characterized in that** these porous particles have a diameter between 10 and 500 µm and **in that** these porous particles comprise between 5 and 20 vol% of pores determined as specified in the description.

2. Process according to Claim 1, **characterized in that** the porous particle is a polymer particle comprising an initiator suitable for hardening the binder or a catalyst or accelerator that accelerates hardening.

3. Process according to Claim 1 or 2, **characterized in that** the polymer particle is a PMMA suspension polymer or MMA copolymer having an average diameter between 30 and 110 µm.

4. Process according to at least one of Claims 1 to 3, **characterized in that** the porous particles are produced by means of suspension polymerization, wherein the monomer mixture comprises a blowing agent.

5. Process according to Claim 4, **characterized in that** the blowing agent is an alkane, a cycloalkane, an alcohol, an aldehyde, a ketone or another organic substance and **in that** the blowing agent has a boiling point between 30°C and 80°C under standard conditions.

6. Process according to Claim 4, **characterized in that** the blowing agent is a compound which at a temperature above 80°C decomposes and thus liberates volatile constituents and **in that** the suspension polymerization is performed at a temperature below this decomposition temperature.

7. Process according to Claim 6, **characterized in that** the decomposing compound is isobutyl or tert-butyl (meth)acrylate which is copolymerized with the monomer mixture.

8. Process according to at least one of Claims 4 to 7, **characterized in that** the monomer mixture further comprises a nucleating agent.

9. Process according to at least one of Claims 1 to 3, **characterized in that** the porous particles are produced by means of suspension polymerization, wherein the monomer mixture comprises non-crosslinked emulsion polymers having a diameter between 10 and 200 nm and **in that** the monomer mixture comprises at least one crosslinker.

10. Process according to Claim 9, **characterized in that** after isolation of the particles the emulsion polymer is leached out of the polymer particle by means of an organic solvent with accompanying pore formation.

11. Process according to Claim 10, **characterized in that** the emulsion polymer has a glass transition temperature, measured by means of DSC, between 30°C and 70°C.

12. Process according to at least one of Claims 1 to 3, **characterized in that** the porous particles are produced by means of suspension polymerization, wherein the monomer mixture comprises wax particles having a diameter between 10 and 100 nm, and **in that** the monomer mixture comprises at least one crosslinker.

13. Process according to at least one of Claims 1 to 12, **characterized in that** the pore former employed is an aliphatic or cyclic alkane and **in that** said alkane is washed out of the particle to achieve pore formation.

14. Process according to Claim 13, **characterized in that** the pore former is cyclohexanol or cyclohexane.

15. Process according to at least one of Claims 1 to 14, **characterized in that** the powder bed is a combination of at least two different suspension polymers, wherein the first suspension polymer constitutes the porous particles and wherein the second suspension polymer is present in the interstices between the first suspension polymer and has a lower glass transition temperature than the first suspension polymer.

## Revendications

1. Procédé pour la préparation d'objets tridimensionnels à partir d'un lit de poudre au moyen d'un procédé de projection de liant en répétant plusieurs fois les étapes de procédé a) dépôt sélectif d'un liant et durcissement consécutif ou simultané de ce liant dans le lit de poudre et b) application d'une nouvelle couche de poudre sur la surface, le lit de poudre présentant au moins une sorte de particules poreuses de polymère, **caractérisé en ce que** ces particules poreuses présentent un diamètre moyen compris entre 10 et 500 µm et **en ce que** ces particules poreuses présentent entre 5 et 20 % en volume de pores, déterminé comme indiqué dans la description.

2. Procédé selon la revendication 1, **caractérisé en ce que** la particule poreuse est une particule de polymère contenant un initiateur approprié pour le durcissement du liant ou un catalyseur ou un accélérateur accélérant le durcissement.

3. Procédé selon la revendication 1 ou 2, **caractérisé en ce que** la particule de polymère est un polymérisat en suspension de PMMA ou un copolymérisat de MMA, doté d'un diamètre moyen compris entre 30 et 110 µm.

4. Procédé selon au moins l'une des revendications 1 à 3, **caractérisé en ce que** les particules poreuses sont préparées au moyen d'une polymérisation en suspension, le mélange de monomères contenant un propulseur.

5. Procédé selon la revendication 4, **caractérisé en ce que** le propulseur est un alcane, un cycloalcane, un alcool, un aldéhyde, une cétone ou une autre substance organique, et **en ce que** le propulseur présente dans des conditions normales une température d'ébullition comprise entre 30 et 80 °C.

6. Procédé selon la revendication 4, **caractérisé en ce que** le propulseur est un composé qui se décompose à une température supérieure à 80 °C et libère alors des ingrédients volatils, et **en ce que** la polymérisation en suspension est mise en œuvre à une température inférieure à cette température de décomposition.

7. Procédé selon la revendication 6, **caractérisé en ce que** le composé qui se décompose est un (méth)acrylate d'isobutyle ou de tert-butyle, qui est copolymérisé avec le mélange de monomères.

8. Procédé selon au moins l'une des revendications 4 à 7, **caractérisé en ce que** le mélange de monomères contient de plus un agent de nucléation.

9. Procédé selon au moins l'une des revendications 1 à 3, **caractérisé en ce que** les particules poreuses sont préparées au moyen d'une polymérisation en suspension, le mélange de monomères contenant des polymérisats en émulsion non réticulés dotés d'un diamètre compris entre 10 et 200 nm, et **en ce que** le mélange de monomères contient au moins un agent de réticulation.

10. Procédé selon la revendication 9, **caractérisé en ce que** le polymérisat en émulsion, après l'isolement des particules, est extrait par dissolution hors de la particule de polymère au moyen d'un solvant organique, avec formation de pores.

11. Procédé selon la revendication 10, **caractérisé en ce que** le polymérisat en émulsion présente une température de transition vitreuse, mesurée au moyen de DSC, comprise entre 30 et 70 °C.

12. Procédé selon au moins l'une des revendications 1 à 3, **caractérisé en ce que** les particules poreuses sont préparées au moyen d'une polymérisation en suspension, le mélange de monomères contenant des particules de lavage dotées d'un diamètre compris entre 10 et 100 nm, et **en ce que** le mélange de monomères contient au moins un agent de réticulation.

13. Procédé selon au moins l'une des revendications 1 à 12, **caractérisé en ce qu'**un alcane aliphatique ou cyclique est utilisé en tant qu'agent de formation de pores, et **en ce que** celui-ci est extrait de la particule par lavage pour la formation de pores.

14. Procédé selon la revendication 13, **caractérisé en ce que** l'agent de formation de pores est le cyclohexanol ou le cyclohexane.

15. Procédé selon au moins l'une des revendications 1 à 14, **caractérisé en ce que** le lit de poudre est une combinaison d'au moins deux polymères en suspension différents, le premier polymérisat en suspension représentant les particules poreuses, et le deuxième polymérisat en suspension étant présent dans les goussets entre le premier polymérisat en suspension et présentant une température de transition vitreuse plus basse que le premier polymérisat en suspension.
